Europäisches Patentamt

(19) European Patent Office (11) Publication number: **0 009 387**

Office européen des brevets **A1**

(12) **EUROPEAN PATENT APPLICATION**

(21) Application number: **79301915.9**

(22) Date of filing: **17.09.79**

(51) Int. Cl.³: **F 01 K 25/10, F 17 C 9/04**

(30) Priority: **18.09.78 US 943292**

(71) Applicant: **FLUOR CORPORATION, 333 Michelson Drive, Irvine California (US)**

(43) Date of publication of application: **02.04.80 Bulletin 80/7**

(72) Inventor: **Mak, John Y., 909 E. Union Street, Fullerton California 92631 (US)**
Inventor: **Giessel, Jurgen, 1045 Cedar Avenue, Long Beach California (US)**

(74) Representative: **Machin, Peter Charles et al, Abel & Imray Northumberland House 303-306 High Holborn, London WC1V 7LH (GB)**

(84) Designated Contracting States: **AT BE CH DE FR GB IT LU NL SE**

(54) Process for obtaining energy during the regasification of liquefied gases.

(57) Mechanical and/or electrical energy is obtained whilst regasifying a liquefied gas, especially natural gas. The liquefied gas is heated in a cryogenic heat exchanger (2) by indirect heat exchange with a working fluid circulating in a closed cycle and is thereafter further heated by passing it in indirect heat exchange with air to be introduced into gas turbine (10). The working fluid passes through a recuperator (19) in which it is heated by indirect heat exchange with expanded working fluid from an expansion turbine (17). In one embodiment the liquefied gas is heated in first and second cryogenic heat exchangers (102, 104) in indirect heat exchange relationship with first and second working fluids, each of which circulates in a closed circuit.

- 1 -

## PROCESS FOR OBTAINING ENERGY DURING THE REGASIFICATION OF LIQUEFIED GASES

This invention relates to a method of obtaining useful mechanical and/or electrical energy during the regasification of a liquefied gas.

One result of the decrease in the oil and natural gas reserves of many countries is a dependence on foreign sources of supply. In addition to the disadvantages inherently resulting from such dependence, transportation of oil and natural gas, especially natural gas, poses special considerations. Thus, although oil may be transported in traditional tankers, the shipment of natural gas overseas requires specialized techniques. One approach for importing natural gas is to ship it as a liquid in the form of liquefied natural gas (LNG). Unfortunately, however, natural gas does not have the same range of uses in its liquid state as when it is gaseous, and consequently, once it arrives in port, the LNG must be permitted to gasify. This gasification may be used to produce work, thus lowering, to some extent, the overall cost of natural gas.

Various attempts have been made to obtain mechanical energy while gasifying a liquefied gas. For example, U.S. Patent No. 3,183,666 describes a method of producing mechanical energy employing the steps of passing a liquefied gas in direct heat exchange with a heat transfer medium or working fluid circulating in a closed cycle, which working fluid is in turn passed in indirect heat exchange with the

- 2 -

exhaust gases of an internal combustion engine. The liquefied gas is thereafter passed in indirect heat exchange with air which is to be fed into an internal combustion engine.

The present invention provides a process for obtaining mechanical and/or electrical energy while regasifying a liquefied gas, which comprises heating the liquefied gas in a cryogenic heat exchanger by indirect heat exchange with a working fluid circulating in a closed circuit, further heating said liquefied gas by passing said liquefied gas in indirect heat exchange with air to be fed into a gas turbine for compression and use as combustion air, then pressurizing said working fluid and passing the same through a recuperator wherein said pressurized working fluid is heated by indirect heat exchange with expanded working fluid from an expansion turbine, passing said pressurized heated working fluid through a gas turbine exhaust exchanger in which said working fluid is further heated by indirect heat exchange with exhaust gas from said gas turbine, passing hot working fluid from said last mentioned heat exchange through said expansion turbine to thereby produce energy, and passing said expanded working fluid from said expansion turbine to said recuperator wherein said expanded working fluid is cooled and thereafter passed to said cryogenic heat exchanger.

In certain especially preferred embodiments the mechanical and/or electrical energy is obtained by utilising two working fluids each of which circulates in a separate closed circuit, as will be disclosed in more detail later.

The present invention is based on our surprising observation that the thermal efficiency of processes for obtaining mechanical and/or electrical energy whilst gasifying liquid gases such as natural gas can be greatly increased. It has been found, for example, that where as in the example given in above-mentioned U.S. Patent 3,183,666 the thermal efficiency is approximately 44%, by using the process of the present invention for LNG cold utilisation thermal efficiencies as high as 58.8% may be obtained.

The term "thermal efficiency" as used herein refers to the electrical energy produced by the process, expressed as a percentage of the heat provided as fuel (lower heating value) in the process, i.e., that consumed in the gas turbine, as will be more fully discussed hereinafter.

One further advantage of the present invention is that when, as in preferred embodiments, the liquefied gas is used to cool the air which is to be supplied to the gas turbine, problems caused by icing due to condensation of moisture from the air are substantially avoided.

The present invention will now be described in more detail with reference to a typical process for using liquefied natural gas, but it will be appreciated that the invention is equally applicable to the utilization of other liquid gases. LNG from the pumps is available at about $-153^{\circ}C$ ($-244^{\circ}F$) and 1440 psia and is used to condense a working fluid, such as a hydrocarbon or a mixture of hydrocarbon and nitrogen, in a closed cycle. Preferably, the LNG is then warmed by sea water or another heat source to about $-24^{\circ}C$ to $-10^{\circ}C$ ($-11^{\circ}F$ to $14^{\circ}F$) before being used at an air precooler to cool ambient air to about $4.5^{\circ}C$ ($40^{\circ}F$) for use in a gas turbine. However, the use of a secondary LNG heater and the turbine air precooler are optional; the cooling of the ambient air to only about $4.5^{\circ}C$ ($40^{\circ}F$) by employing natural gas to about $-24^{\circ}C$ to $-10^{\circ}C$ ($-11^{\circ}F$ to $14^{\circ}F$) prevents ice formation due to condensation of moisture from the air at the precooler.

In the closed cycle, the working fluid is heated by the exhaust gases from a gas turbine to a temperature in the range of about $260^{\circ}C$ to $482^{\circ}C$ ($500^{\circ}F$ to $900^{\circ}F$). The hot, high pressure working fluid is expanded across an expansion turbine. The expanded working fluid at about $149^{\circ}C$ to $316^{\circ}C$ ($300^{\circ}F$ to $600^{\circ}F$) and about 20-90 psia then exchanges heat at a recuperator with the cold pressurized working fluid. The expanded working fluid is cooled to about $-73^{\circ}C$ to $10^{\circ}C$ ($-100^{\circ}F$ to $+50^{\circ}F$) and the pressurized working fluid is heated at the recuperator to about $66^{\circ}C$ to $121^{\circ}C$ ($150^{\circ}F$ to $250^{\circ}F$). The cooled expanded working fluid is then condensed by

- 4 -

indirect heat exchange with the LNG as the LNG enters the system, and the condensed working liquid is pressurized before passing to the recuperator. The working fluid from the recuperator finally goes to the turbine exhaust exchanger for further heating by indirect heat exchange with gas turbine exhaust gas.

Various embodiments of the present invention will now be described in more detail, by way of example only, with reference to the accompanying drawings, in which:

Figure 1   shows a single cycle power system in accordance with the present invention.

Figure 2   shows a dual cycle power system in accordance with the present invention.

Figure 3   shows a heat curve for the combustion air precooler using ethane as a working fluid.

Figure 4   shows a heat curve for the turbine exhaust exchanger using ethane as the working fluid.

Figure 5   shows a heat curve for the recuperator using ethane as the working fluid.

Figure 6   shows a heat curve for the condenser using ethane as the working fluid.

Figure 7   shows a heat curve for the LNG heater using ethane as the working fluid.

Figure 8   shows a heat curve for the combustion air precooler using nitrogen and hydrocarbon mixture as a working fluid.

Figure 9   shows a heat curve for the turbine exhaust exchanger using a nitrogen and hydrocarbon mixture as a working fluid.

Figure 10  shows a heat curve for the recuperator using a nitrogen and hydrocarbon misture as the working fluid.

Figure 11  shows a heat curve for the condenser using a nitrogen and hydrocarbon mixture as a working fluid.

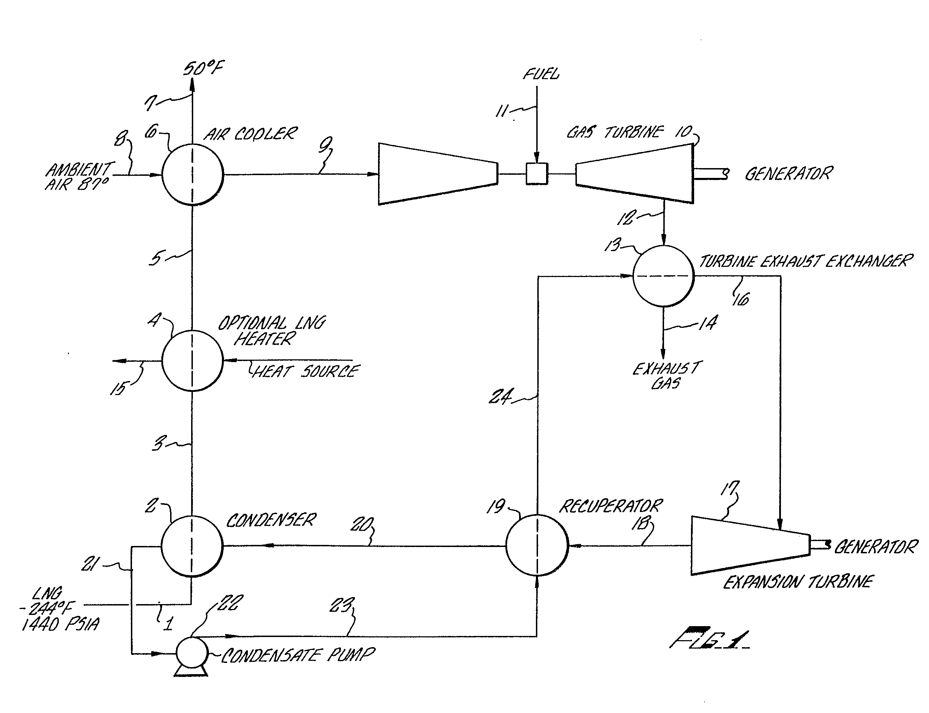

Referring first to Figure 1, a cold liquefied gas, usually LNG (although virtually any liquefied gas such as methane or other hydrocarbons, nitrogen, oxygen etc., may be employed) is applied through line 1 at a temperature of about -153°C (-244 F) and 1440 psia to cryogenic heat exchanger 2 in which heat carried by the working fluid of a closed cycle is supplied to the liquefied gas. This heat is transferred to the working fluid from the exhaust gases of a gas turbine, as will be explained later. From the heat exchanger 2 the cold material passes through line 3 to optional heat exchanger 4 in which more heat is supplied. Heat may be provided to optional heat exchanger 4 from the gas turbine or from one or more other heat sources, as will be explained later. From optional heat exchanger 4, the material flows through line 5 to heat exchanger 6 where heat is supplied by air which enters through line 8. The by-now vapourized natural gas (or other gaseous material) leaves heat exchanger 6 through line 7. The air, which enters at ambient temperature, is cooled in heat exchanger 6 to about 4.5°C (40°F) and passes through line 9 to a gas turbine 10 in which the air is compressed and then used for combustion. Fuel is supplied to the gas turbine 10 through line 11. The turbine exhaust gases leave the turbine 10 at a relatively high temperature through line 12 and are passed to a heat exchanger 13. The gas turbine exhaust gases are cooled in heat exchanger 13 and are either passed directly to the atmosphere or, for example, through line 14 to optional heat exchanger 4, following which they are passed to the atmosphere through line 15.

Heat from the gas turbine exhaust gases passing through heat exchanger 13 is transferred to a working fluid or heat transfer medium, which is at elevated pressure and which passes through heat exchanger 13. The working fluid thus exists in exchanger 13 at high temperature and elevated pressure and is passed through line 16 to an expansion turbine 17 where it is expanded to a lower pressure, thus producing mechanical energy which can be used to generate electricity. The expanded working fluid leaving expansion turbine 17 passes through a line 18 to recuperator 19 where it is cooled. From recuperator 19, the exhaust working fluid flows through line 20 to heat exchanger 2. In heat exchanger 2, the exhaust working fluid is condensed as heat is transferred from it to the liquefied gas which is to be gasified.

The condensed working fluid leaves heat exchanger 2 and is passed through a line 21 to a pump 22 in which the pressure of the working fluid is raised to an elevated pressure. From pump 22 the pressurized working fluid is passed through line 23 to recuperator 19. From recuperator 19, the pressurized working fluid, which is usually a super-critical fluid, is passed through line 24 to heat exchanger 13.

The working fluid may be any fluid which condenses at the LNG vapourization temperatures, either a pure component or a mixture of working fluids, but mixed fluids are particularly advantageous. It has been found that a complete LNG cold utilization requiring no external heating other than the gas turbine fuel, such as sea water or a fuel heater, may be accomplished by using a mixture of working fluids in the closed cycle. The mixed fluid closed cycle efficiently utilizes both the cold of the LNG and the heat of the gas turbine exhaust. The overall power cycle efficiency ranges from 52% to 55%. The 52% efficiency is obtained by the simple mixed fluid cycles while the 55% efficiency is accomplished by using a dual closed-cycle system, a pure component and a mixed fluid power cycle. The pure component cycle in the dual cycle system attains a very high thermal efficiency of 58.8%, due to the utilization of the LNG deep cold. The dual cycle systems allows installation of a very highly efficient power plant for an initially small requirement using the first cycle, and a later expansion by adding the second cycle for a complete LNG utilization. A further increase in overall efficiency can be obtained by using two mixed working fluid closed cycles, the first containing nitrogen and light hydrocarbons to take advantage of the deep cold of the LNG and the second containing a mixture of heavier hydrocarbons to recover remaining less valuable refrigeration of the LNG.

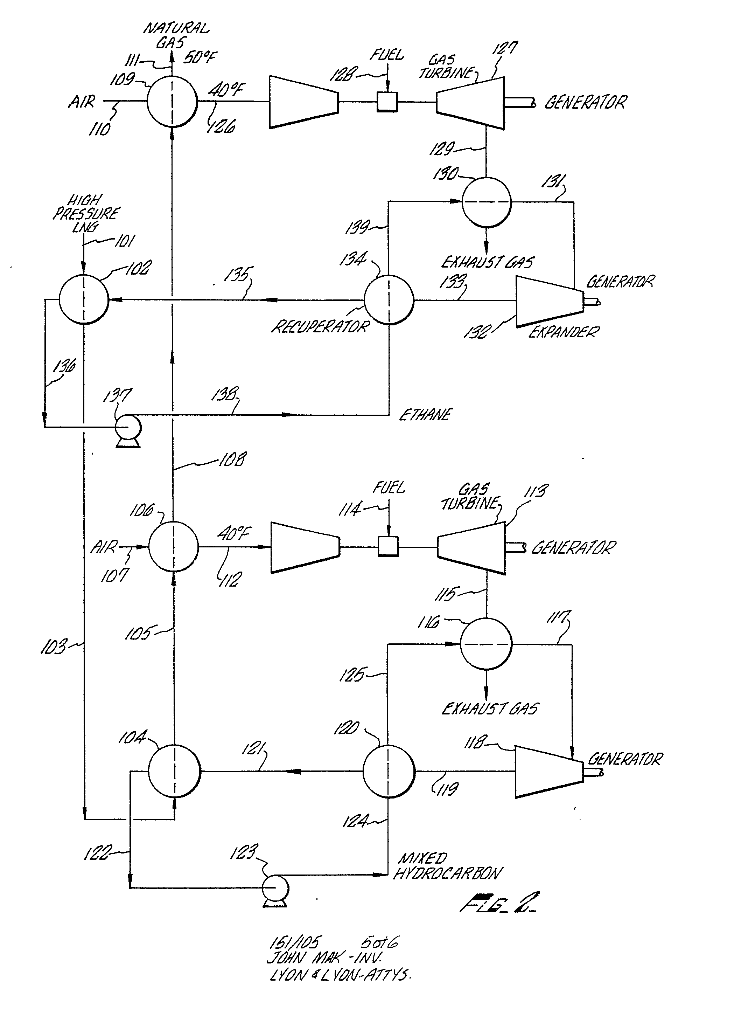

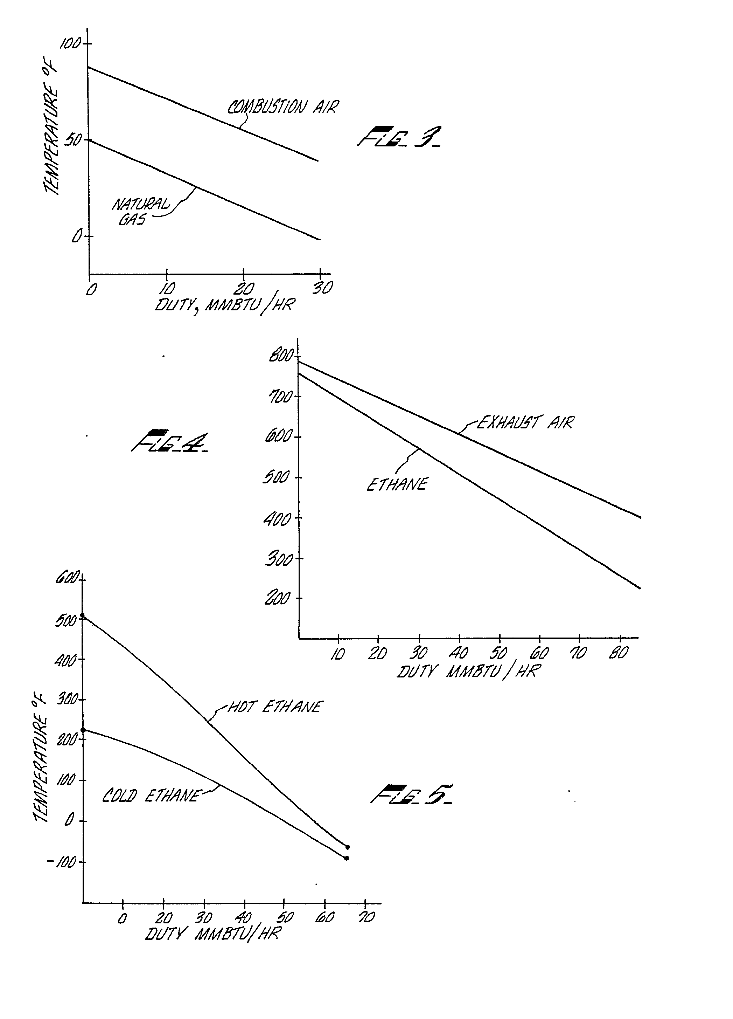

The high thermodynamic efficiency achieved by the present invention is due to the presence of the recuperator in conjunction with the particular working fluid. The advantages of the mixed working fluid can be shown by the matching of the heat/cooling curves for the gas turbine exhaust exchanger and the condenser. The close temperature approaches between the cold heat sink (LNG) and the working fluid and the hot heat sink (turbine exhaust gas) and the working fluid represents a minimum thermodynamic work loss which corresponds with higher thermodynamic efficiency. Figures 3 to 11 show the heating/cooling curves for Examples 1 and 3 which are given later. The difference in working fluids corresponds to an improvement in efficiency of from 48% to 52% .

Amongst the improvements over the prior art that contribute to the overall increase in efficiency of the present invention there may be mentioned, for example, the facts that because of the recuperator, working fluid entering the turbine exhaust exchanger is in a superheated condition; hence the expander inlet can be heated to a higher temperature. Secondly, with the recuperator, the temperature of the working fluid entering the condenser can be at or near saturation, without an extremely high expansion ratio in the turbine, and is restricted only by the temperature approach to the cold liquid from the condensate pump. As a result, the recuperator serves as a regasifier for the cold pressurized working liquid and the turbine exhaust exchanger usually serves only as a superheater.

Figure 2 shows a dual cycle power system. High pressure liquefied gas passes from line 101 and flows into heat exchanger 102, wherein it obtains heat from the working fluid of the first closed cycle, and then passes through line 103 to heat exchanger 104 wherein it obtains heat from the working fluid of the second closed cycle in the same manner as in heat exchanger 102. The material then passes through line 105 to the air precooler 106 where ambient air for the gas turbine of the second closed cycle enters through line 107 and heats the material. The material is passed trhough line 108 to the air precooler 109 and leaves as a gaseous material in line 111.

For the first closed cycle, the air from line 110 has passed through air precooler 109 and is cooled down and then passes through line 126 to a gas turbine 127 in which the air is compressed and used for combustion. Fuel is supplied to the gas turbine 127 through a line 128. The combustion products thus formed leave the turbine 127 as exhaust gases having a relatively high temperature. The relatively hot exhaust gases are passed through a line 129 to heat exchanger 130 and are cooled down. The exhaust gases leave heat exchanger 130 and may be passed to the atmosphere. If desired, however, these gases may be passed through an additional heat exchanger (not shown) positioned after heat exchanger 102.

Heat from the hot exhaust gases passing through heat exchanger 130 is transferred to a working fluid or heat transfer medium at elevated pressure and which passes through heat exchanger 130. This heated gas is passed through line 131 to an expansion turbine 132 where it is expanded to a lower pressure, thus producing mechanical energy which can be used to generate electricity. Expanded working fluid leaves expander 132 and is passed through line 133 to a recuperator 134. From recuperator 134, the expanded working fluid passes through line 135 to heat exchanger 102. In heat exchanger 102, the working fluid is condensed and heat is transferred to the liquefied gas. The condensed working fluid passes from heat exchanger 102 through line 136 to pump 137 in which the working medium is pressurized. From pump 137, the pressurized working fluid is passed through 138 to recuperator 134. From recuperator 134, the pressurized working fluid is passed through line 139 to heat exchanger 130.

For the second closed cycle, air entering through line 107 and passing through air precooler 106 encounters a similar sequence. From precooler 106, the air passes through line 112 to gas turbine 113. In gas turbine 113, where the air is compressed and used for combustion, fuel is supplied through line 114. The combustion products formed leave the turbine 113 in the form of exhaust gases and are passed through line 115 to heat exchanger 116 where they are cooled. The exhaust gases leave heat exchanger 116 and may be passed to the atmosphere. Alternatively, as in the case with heat exchanger 130, if it is desired, the gases may be passed through a second additional heat exchanger positioned after heat exchanger 102 (not shown).

Heat from the exhaust gases passing through heat exchanger 116 is transferred to a working fluid. As before, this fluid at high temperature and pressure passes through line 117 to expansion turbine 118. The superheated working fluid from turbine 118 passes through line 119 to a recuperator 120. From the recuperator, the working fluid passes through line 121 to heat exchanger 104 where the working fluid is condensed and heat is transferred to the liquefied gas preheated by the first cycle. The condensed working fluid passes from heat exchanger 104 through line 122 to pump 123 where the working fluid is raised to an elevated pressure. From pump 123, the working fluid at an elevated pressure is passed through line 124 to the recuperator 120 from which it is passed through line 125 to heat exchanger 116.

The following Examples illustrate the invention.

The First Example uses ethane as the pure component working fluid while the second employs a mixed hydrocarbon. The third Example uses a mixture of hydrocarbons and nitrogen as the working fluid. Finally, for more efficient power generation, the fourth Example presents a dual cycle scheme in which the first cycle uses ethane to utilize the deep cold portion of LNG while the second cycle uses a mixed hydrocarbon to use the remaining, less cold portion.

- 10 -

The results are summarized in the following table:

| Example | Working Fluid | Gas Turbine KW | Total Power Production KW | Fuel Consumed MM BTU/HR | Thermal Efficiency % |
|---|---|---|---|---|---|
| 1. | Ethane | 37,800 | 48,908 | 347(101,611KW) | 48.1 |
| 2. | Mixed hydrocarbon | 37,800 | 52,616 | 347(101,611KW) | 51.7 |
| 3. | Mixed hydrocarbon & Nitrogen | 37,800 | 52,901 | 347(101,611KW) | 52.0 |
| 4. | Ethane cycle & Mixed hydrocarbon cycle | 75,600 | 110,857 | 694(203,221KW) | 54.5 |

The thermal efficiencies set forth above were calculated by dividing the Total Power Production by the heat provided as fuel, i.e., consumed in the gas turbine. Thus, for example, in the ethane cycle above, the efficiency was calculated by first converting the fuel consumed, 347,000,000 BTU/HR, to kilowatts by dividing by a factor of 3415 BTU/HR per kilowatt, which gives 101,611 kilowatts input, which in turn is divided into the Total Power Production, 48,908 kilowatts, yielding a thermal efficiency of 48.1%.

The above tabulation exhibits the improvement in thermal efficiency when using a mixed working fluid in the power cycle. The increased efficiency can be explained by the close matching of heating/cooling curves for the mixed working fluid and the LNG vaporization with relatively small difference in temperature at every point. The dual cycle scheme is another improvement. In the dual cycle scheme, if a mixed working fluid is used instead of a pure compound, further increased efficiency would be found.

In the foregoing Examples, the Examples 1 through 3 utilized the process depicted by Figure 1 of the drawings, while Example 4 utilized the process depicted by Figure 2.

- 11 -

In all examples, liquefied natural gas was processed having the following composition:

| | |
|---|---|
| $N_2$ | 0.02 Mol % |
| $C_1$ | 86.45 Mol % |
| $C_2$ | 8.48 Mol % |
| $C_3$ | 3.99 Mol % |
| $C_4$ | 1.06 Mol % |

The temperatures and pressures at various placed in the process are shown in the tables which follow with the numbers across the top of the tables corresponding to the numbers in Figures 1 and 2 respectively, thereby indicating the temperature and pressure at such location in the process. Thus, for example, in the table for Example 1, utilizing ethane as the working fluid, the temperature of the liquefied natural gas in line 1 is $-153^{\circ}C$ ($-244^{\circ}F$), while the pressure is 9928.5 Kpa (1440 PSIA). In line 3, the temperature of the LNG is $-87^{\circ}C$ ($-125^{\circ}F$) and the pressure is 9825 Kpa (1425 PSIA), while the temperature in line 5 is $-19^{\circ}C$ ($-2^{\circ}F$) and the pressure is 9756 Kpa (1415 PSIA). The working fluid has a temperature in line 16 of $406^{\circ}C$ ($763^{\circ}F$) and a pressure of 7212 Kpa (1046 PSIA). The temperatures and pressures given for lines 18, 20, 21, 23 and 24 are also for the working fluid.

Temperature and Pressure Values
At Various Locations
In The Power Cycle

1.  Ethane:

| | | 1 | 3 | 5 | 16 | 18 | 20 | 21 | 23 | 24 |
|---|---|---|---|---|---|---|---|---|---|---|
| Temperature | ($^{\circ}$F | -244 | -125 | -2 | 763 | 508 | -68 | -100 | -93 | 288 |
| | ($^{\circ}$C | -153 | - 87 | -19 | 406 | 264 | -56 | - 73 | -69 | 142 |
| Pressure | (PSIA | 1440 | 1425 | 1415 | 1046 | 48 | 40 | 32 | 1056 | 1051 |
| | (Kpa | 9928 | 9825 | 9756 | 7212 | 331 | 276 | 207 | 7281 | 7246 |

- 12 -

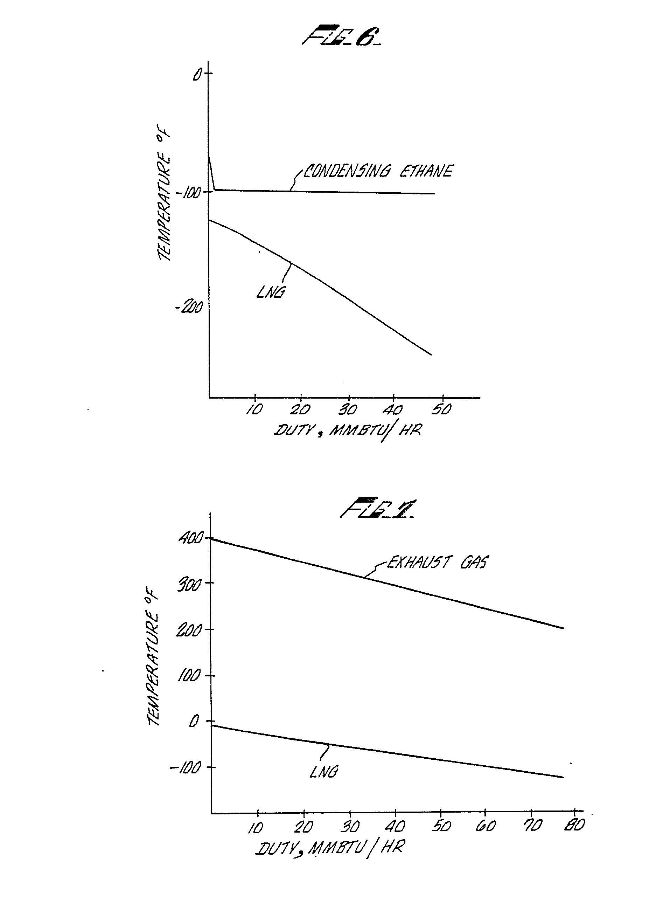

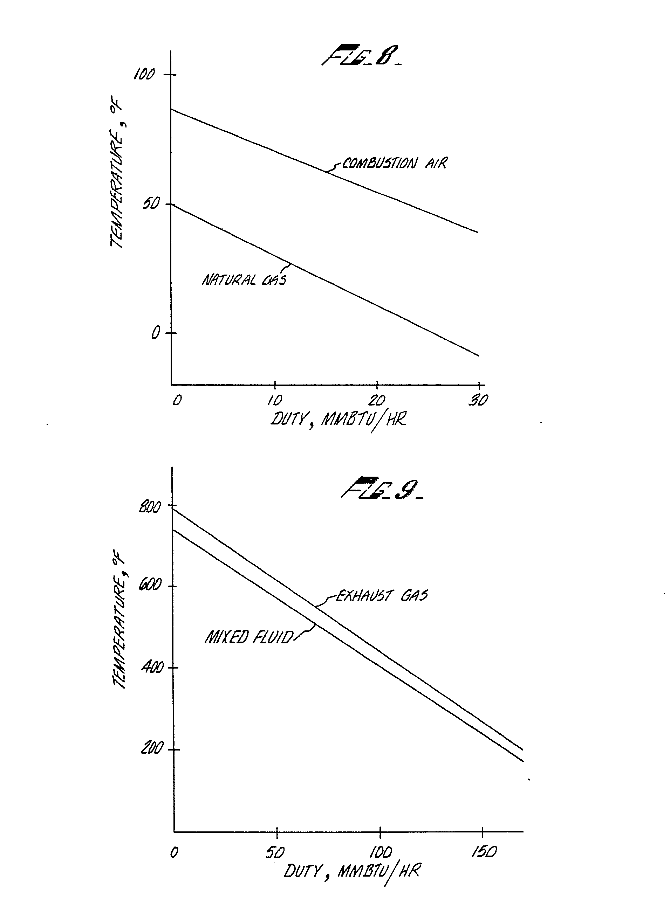

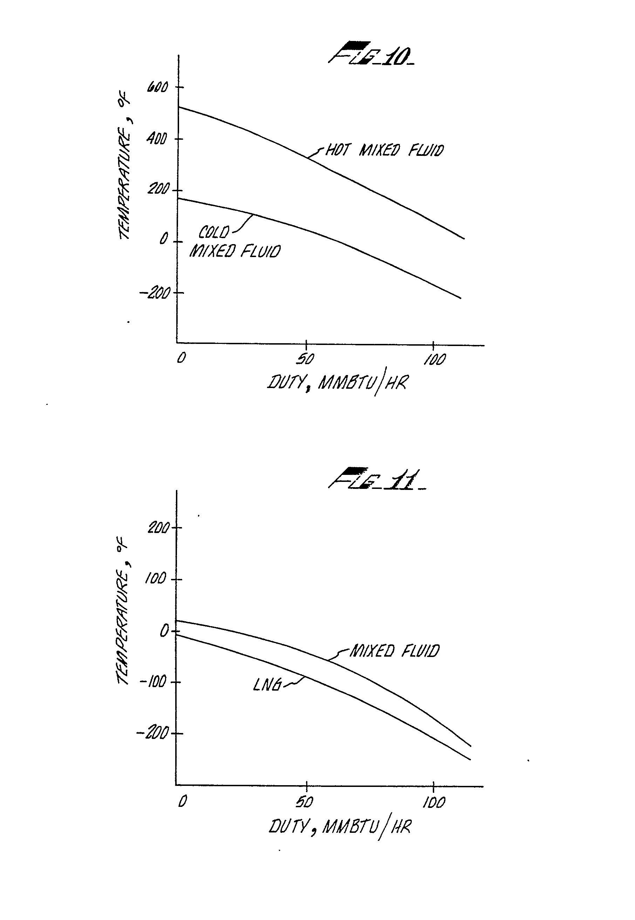

Flow of LNG at 13,705 Kg Moles/Hr. (30,055 lb. Moles/Hr.), Working Fluid 3,402 Kg Moles/Hr. (7,501 lb. Moles/Hr.). In this pure component power cycle, the LNG heater (see Optional LNG Heater 4 in Figure 1) is used to heat LNG to $10^{\circ}C$ ($50^{\circ}F$) sendout temperature with gas turbine exhaust heat. Figures 3-7 show the heat curves of the present invention at various points in the process. Figure 3 exhibits the curve for the air combustion precooler while Figure 4 shows the turbine exhaust exchanger. Figure 5 shows the recuperator heat curve, Figure 6 shows the condenser heat curve, and Figure 7 shows the LNG heater heat curve.

2.  **Mixed Hydrocarbon Fluid:**

|  |  | 1 | 3 | 7 | 16 | 18 | 20 | 21 | 23 | 24 |
|---|---|---|---|---|---|---|---|---|---|---|
| Temperature | ($^{\circ}F$ | -244 | -7 | 50 | 738 | 547 | 35 | -219 | -216 | 171 |
|  | ($^{\circ}C$ | -153 | -21 | 10 | 392 | 286 | 2 | -139 | -137 | 77 |
| Pressure | (PSIA | 1440 | 1425 | 1415 | 640 | 29 | 21 | 16 | 650 | 645 |
|  | (Kpa | 9925 | 9825 | 9756 | 4413 | 200 | 145 | 100 | 4482 | 4447 |

Flow of LNG at 12,303 Kg Moles/Hr (27,123 lb. Moles/Hr.), Working Fluid 4,591 Kg Moles/Hr. (10,121 lb. Moles/Hr.). The mixed working fluid has a composition containing approximately 20% $C_1$ compounds, 20% $C_2$ compounds, 20% $C_3$ compounds and 40% $C_4$ + compounds.

3.  **Mixed Nitrogen and Hydrocarbon Working Fluid:**

|  |  | 1 | 3 | 7 | 16 | 18 | 20 | 21 | 23 | 24 |
|---|---|---|---|---|---|---|---|---|---|---|
| Temperature | ($^{\circ}F$ | -244 | -8 | 50 | 738 | 525 | 20 | -219 | -214 | 178 |
|  | ($^{\circ}C$ | -153 | -22 | 10 | 392 | 274 | -7 | -139 | -137 | 81 |
| Pressure | (PSIA | 1440 | 1425 | 1415 | 1300 | 80 | 72 | 67 | 1310 | 1305 |
|  | (Kpa | 9928 | 9825 | 9756 | 8963 | 552 | 496 | 462 | 9032 | 8998 |

Flow of LNG 12,145 Kg Moles/Hr. (26,774 lb. Moles/Hr.), Working Fluid 5,421 Kg Moles/Hr. (11,951 lb. Moles/Hr.). The composition of the working fluid is 2% $N_2$, 28% $C_1$ compounds, 30% $C_2$ compounds, 25% $C_3$ compounds and 15% $C_4$ + compounds.

Figures 8-11 show the heat curves of the present invention at various points in the process. Figure 8 exhibits the curve for the air combustion precooler while Figure 9 shows the turbine exhaust exchanger. Figure 10 shows the recuperator heat curve and Figure 11 pertains to the condenser.

4. <u>Ethane and Mixed Hydrocarbon Cycle</u>:

|  |  | 101 | 103 | 105 | 108 | 131 | 133 | 135 | 136 |
|---|---|---|---|---|---|---|---|---|---|
| Temperature | ($^\circ$F | -244 | -113 | -11 | 14 | 688 | 436 | -67 | -100 |
|  | ($^\circ$C | -153 | - 81 | -24 | -10 | 264 | 224 | -55 | - 73 |
| Pressure | (PSIA | 1440 | 1430 | 1420 | 1410 | 1046 | 48 | 40 | 32 |
|  | (Kpa | 9928 | 9860 | 9791 | 9722 | 7212 | 331 | 276 | 221 |

|  |  | 138 | 139 | 117 | 119 | 121 | 122 | 124 | 125 |
|---|---|---|---|---|---|---|---|---|---|
| Temperature | ($^\circ$F | -93 | 169 | 600 | 418 | 10 | -94 | -90 | 202 |
|  | ($^\circ$C | -69 | 76 | 315 | 213 | -12 | -70 | -68 | 94 |
| Pressure | (PSIA | 1056 | 1051 | 725 | 33 | 25 | 20 | 735 | 730 |
|  | (Kpa | 7281 | 7246 | 4999 | 228 | 172 | 138 | 5068 | 5033 |

Flow of LNG 22,524 Kg Moles/Hr. (49,655 lb. Moles/Hr.), Ethane Working Fluid 15,326 lb. Moles/Hr., Mixed Hydrocarbon Working Fluid 6,952 Kg Moles/Hr. (11,582 lb. Moles/Hr.). The composition of the mixed fluid is 1% $N_2$, 29% $C_2$, 40% $C_3$, 30% $C_4$+. The first closed cycle with ethane achieves a high thermal efficiency of 58.8% because of the deep cold heat sink it utilizes of LNG, and the second cycle attains an efficiency of 50.5%, resulting in an overall 54.5% thermal efficiency.

Other modifications and variations falling within the scope of the present invention will be apparent to those skilled in the art.

0009387

- 14 -

Claims:

1. A process for obtaining mechanical or electrical energy while regasifying a liquefied gas, which comprises heating the liquefied gas in a cryogenic heat exchanger by indirect heat exchange with a working fluid circulating in a closed circuit thereby condensing said working fluid, pressurizing said condensed working fluid and passing the same through a recuperator wherein said pressurized working fluid is heated by indirect heat exchange with expanded working fluid from an expansion turbine, passing said pressurized heated working fluid through a gas turbine exhaust exchanger in which said working fluid is further heated by indirect heat exchange with exhaust gas from said gas turbine, passing hot working fluid from said last mentioned heat exchange through said expansion turbine to thereby produce energy, and passing said expanded working fluid from said expansion turbine to said recuperator wherein said expanded working fluid is cooled and thereafter passed to said cryogenic heat exchanger.

2. A method according to claim 1 wherein said working fluid is ethane.

3. A method according to claim 1 wherein said working fluid is a mixed hydrocarbon.

4. A method according to claim 1 wherein said working fluid contains nitrogen and hydrocarbons.

5. A method according to claim 1 wherein the exhaust gases emanating from the gas turbine pass in indirect heat exchange with the liquefied gas after passing in indirect heat exchange with the working fluid.

6. A method according to claim 1 wherein said turbine exhaust gases, after passing in indirect heat exchange with the working fluid, are passed to the atmosphere.

7. A process for obtaining mechanical or electrical energy while regasifying a liquefied gas, which comprises heating the liquefied gas in a first and second cryogenic heat exchanger by indirect heat exchange with a first and second working fluid circulating in closed circuits thereby condensing said working fluids, pressurizing said first and second condensed working fluids and passing the same through recuperators in which said pressurized working fluids are heated by indirect heat exchange with expansion working fluid from an expansion turbine, passing pressurized heated working fluid through gas turbine exhaust exchangers which each of said working fluids is further heated by indirect heat exchange with exhaust gas from said gas turbines, passing hot working fluids from said last mentioned indirect heat exchange steps through expansion turbines thereby producing energy, and passing expanded working fluids from said expandion turbines to said recuperators wherein said expanded working fluids are cooled and thereafter passed to said cryogenic exchangers.

8. A method according to claim 7 wherein said working fluid is ethane.

9. A method according to claim 7 wherein said working fluid is a mixed hydrocarbon.

10. A method according to claim 7 wherein said working fluid contains nitrogen and hydrocarbons.

11. A method according to claim 7 wherein ethane is the first working fluid and the second working fluid comprises a mixed hydrocarbon.

12. A method according to claim 7 wherein the exhaust gases emanating from the gas turbine pass in indirect heat exchange with the liquefied gas after passing in indirect heat exchange with the working fluid.

13. A method according to claim 7 wherein said turbine exhaust gases are passed to the atmosphere after passing in indirect heat exchange with the working fluid.

14. A process for obtaining mechanical or electrical energy while regasifying a liquefied gas which comprises:

(a) heating the liquefied gas in a cryogenic exchanger by indirect heat exchange with a working fluid

0009387

- 16 -

comprising mixed hydrocarbons after which said fluid is pressurized;

(b) heating said liquefied gas of step (a) in an air cooler producing cooled air which is passed to a gas turbine for compression and use as combustion air;

(c) passing the pressurized working fluid of step (a) through a recuperator in which said working fluid is heated by indirect heat exchange with exhaust working fluid from an expansion turbine;

(d) passing pressurized working fluid of step (c) through a gas turbine exhaust exchanger in which said working fluid is further heated by indirect heat exchange with exhaust gas from the gas turbine of step (b);

(e) passing hot working fluid of step (d) through an expansion turbine thereby producing mechanical energy;

(f) passing exhaust working fluid from the expansion turbine of step (d) to said recuperator of step (c) in which said exhaust working fluid is cooled and passed to the cryogenic exchanger of step (a) where it is condensed.

15. The process of claim 14 in which said liquefied gas is liquefied natural gas.

FIG.1

50°F

FUEL

GAS TURBINE 10

GENERATOR

AIR COOLER

AMBIENT AIR 87°

OPTIONAL LNG HEATER

HEAT SOURCE

TURBINE EXHAUST EXCHANGER

EXHAUST GAS

CONDENSER

RECUPERATOR

EXPANSION TURBINE

GENERATOR

LNG -244°F 1440 PSIA

CONDENSATE PUMP

1/6

0009387

FIG. 2

3/6

0009387

FIG. 3.

FIG. 4.

FIG. 5.

FIG_6.

FIG_7.

_FIG_8_

_FIG_9_

_Fig 10_

_Fig 11_

## EUROPEAN SEARCH REPORT

European Patent Office

Application number

EP 79 30 1915

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| X | US - A - 3 068 659 (MARSHALL)<br><br>* Column 2, lines 9-72; column 3, lines 1-25; figures * | 1,2,5, 7,8,12, 14,15 | F 01 K 25/10<br>F 17 C 9/04 |
| | FR - A - 2 300 216 (SULZER)<br><br>* Page 2, lines 33-37; page 5, lines 18-37; figure * | 3,9 | |
| | CHEMICAL ABSTRACTS, vol. 81, no. 8, 26th August 1974, page 145, no. 39695c<br>Columbus, Ohio, U.S.A.<br><br>& JP - A - 74 17401 (CHIYODA CHEMICAL ENGINEERING AND CONSTRUCTION CO., LTD.) 15-02-1974<br><br>* Abstract * | 4,10 | TECHNICAL FIELDS SEARCHED (Int.Cl.3)<br><br>F 01 K<br>F 17 C |
| D | US - A - 3 183 666 (JACKSON)<br><br>* Column 1, lines 51-72; column 2, lines 1-42; figure * | 14 | |
| | | | CATEGORY OF CITED DOCUMENTS<br><br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| The present search report has been drawn up for all claims | | | &: member of the same patent family, corresponding document |

| Place of search | Date of completion of the search | Examiner |
|---|---|---|
| The Hague | 19-12-1979 | V. GHEEL |

EPO Form 1503.1  06.78